# EUROPEAN PATENT APPLICATION

(11) **EP 1 271 360 A2**
(43) Date of publication of application: **02.01.2003**
(21) Application number: 02254530.5
(22) Date of filing: 27.06.2002
(51) Int. Cl.: G06F 17/30

(54) **Universal data mapping system**

(30) Priority: 27.06.2001 US 301462 P; 13.11.2001 US 8001
(71) Applicant: Openwave Systems Inc., Redwood City, CA 94063 (US)
(72) Inventor: Arbo, Ronald, North Andover, Massachusetts 01845 (US); Pamer, Steven A., Bedford, Massachusetts 01730 (US); Zheglov, Alexei, Wateryliet, New York 12189 (US); Roy, Williams S., Londonderry, New Hampshire 03053 (US); Mirkina, Olga, Dedham, Massachusetts 02026 (US)
(74) Representative: Haley, Stephen

(57) **Abstract**

A universal mapping system, including apparatuses and methods, which is configurable through use of selectable configuration files to perform the bi-directional mapping and conversion of data between different data structures and formats. Each configuration file uniquely corresponds to a particular type of device which stores mappable data in a structure and/or format different than those of other types of devices. The universal mapping system is operable to perform mappings of data according to priority rules which are definable in the configuration files and which govern the order in which the mappings of data elements are performed. The universal mapping system is also adapted to maintain associations between data elements resulting from prior mappings. Additionally, the universal mapping system is operable to persist unmappable data from a source during a mapping in one direction and to return the unmappable data to that source during a subsequent mapping in the opposite direction.

## Description

This invention relates, generally, to the fields of data mapping and data synchronization, and in its preferred embodiment, to the mapping of personal information management data which is synchronized in a client/server environment.

For a number of years, computer software vendors have offered "personal information management" software for operation on networked and standalone computers. The personal information management software enables a user of the software to enter, edit, manage, store, and retrieve "personal information" including, for example: names, telephone and facsimile numbers, street and email addresses, and other data associated with contacts; appointments; "to do" lists; and, various other types and forms of information. Such computer software has served users well, but over the past few years, there has been tremendous growth in the manufacture and use of hand-held devices equipped with software which, generally, enable their users to perform substantially similar tasks while unconnected or untethered to a traditional computer. The hand-held devices (e.g., including, but not limited to, wireless telephones, personal data assistants ("PDAs"), hand-held computers, portable computers, and pagers) were, and continue to be, made by a number of different manufacturers and, as a consequence, store data representative of such personal information in a number of different structures and formats.

Because the hand-held devices enable the entry, editing, managing, storing, and retrieving of personal information in an, essentially, "off-line" manner, users of the hand-held devices often experienced difficulty in maintaining synchronization and consistency of personal information stored on the hand-held devices with personal information stored, for instance, on a computer at their offices. The computer software vendors, recognizing the presence of this difficulty, developed synchronization computer software which aided users of such hand-held devices in maintaining the synchronization and consistency of personal information stored on their hand-held devices with personal information stored on the users' office or other computers. The synchronization software substantially resolved the synchronization difficulties experienced by many users of hand-held devices. Unfortunately, the synchronization software required the use of a physical communication connection (e.g., a cable) between a respective hand-held device and an office or other computer to enable the transfer of data representative of the personal information ("personal information data") in an appropriate direction (i.e., to/from the hand-held device), Also, from the software vendor's perspective, the development and maintenance of such software was made difficult by the variety of different data formats and protocols used by the hand-held devices to store and communicate the personal information data.

Today, SyncML has emerged and serves as the "standard" protocol for communicating and synchronizing personal information between computers and hand-held devices. SyncML provides common formats for the exchange of personal information management ("PIM") data between such computers and hand-held devices, including the "vCard" format for contact data and the "vCalendar" format for events (i.e., appointments or other scheduled events) and tasks. However, the synchronization software vendors are still faced with difficulties created by the multitude of different data formats used by server computers, standalone computers, and hand-held devices to store personal information. For instance, for each contact, a PIM database on a server computer may have two, thirty character-long fields for the storage of a contact's address, while a first hand-held device may have one, fifty character-long field for storage of the contact's address and a second hand-held device, of a different type than the first hand-held device, may have three, twenty character-long fields for storage of the contact's address. Also, each of the server computer and hand-held devices may allow the storage of certain characters and disallow the storage of other characters in a unique manner. Additionally, each of the hand-held devices may map their PIM data to/from the vCard format, and its properties, in different ways. As a consequence, to enable the communication and subsequent synchronization of PIM data between the server computer's PIM database and the hand-held devices' PIM data stores, the different numbers and formats of fields must be mapped and/or converted to/from the vCard format by a server computer based, at least, upon on the direction of the transfer of PIM data, on the number and formats of the fields for data storage employed by the server and hand-held devices, on the allowed/disallowed characters, and on the manner in which the different hand-held devices map their PIM data to/from the vCard format.

The majority of synchronization software vendors handle such requisite mapping and conversion of PIM data in their software by employing a set of software drivers which are specifically written and tailored to map and convert PIM data to/from the hand-held devices supported by their synchronization software. Because of the differences in the manners in which each type of hand-held device may store and, otherwise, handle PIM data, the synchronization software must, generally, include a software driver for each type of hand-held device. The development of such software drivers requires the analysis of the PIM data store structures of each type of hand-held device and the mappings between their data fields and the vCard and server PIM data structures, the design of appropriate driver software, the implementation (i.e., programming or coding) of the driver software, and the testing of the driver software. Hence, the development of such software drivers requires the expenditure of substantial resources in terms of time and money and may be fraught with potential errors.

Therefore, there is a need in the industry for a mapping system for use in conjunction with contact or personal information synchronization that enables the mapping and conversion of personal information between a server PIM database, the data stores of different types of hand-held devices, and vCards which addresses these and other related, and unrelated, shortcomings.

Broadly described, the present invention comprises a universal mapping system, including apparatuses and methods, which is configurable through the use of selectable configuration files to perform the bi-directional mapping and conversion of data between different data structures and formats. Each configuration file corresponds, in a one-to-one relationship, to a type of device which stores mappable data in a structure and/or format different than those of other types of devices. The universal mapping system is operable to perform mappings of data in accordance with priority rules which are definable in the configuration files and which govern the order in which the mappings of data elements (i.e., properties and/or fields) are performed. The universal mapping system is also adapted to maintain, in subsequent mappings, associations between data elements resulting from prior mappings. Additionally, the universal mapping system is operable to persist unmappable data from a source during a mapping in one direction and to return the unmappable data to that source during a subsequent mapping in the opposite direction.

More narrowly described, the present invention comprises a universal mapping system, including apparatuses and methods, which may be utilized, in one form, as a portion of a synchronization system for the synchronization of personal information management data between a server computer system and a plurality of client devices of different types. The universal mapping system is configurable to enable the bi-directional mapping and conversion of personal information management data which is stored on the server computer system in a first structure and/or format and on the client devices in different structures and/or formats which are unique to each particular type of client device. Preferably, the personal information management data includes contact information which is exchanged between the server computer system and the client devices in accordance with the SyncML protocol and the vCard format. Because each type of client device, generally, maps data to/from the vCard format in a different manner, the universal mapping system includes a configuration file for each type of supported client device. Each configuration file may be identified and selected for use, during a synchronization session, based on the type of client device which is exchanging contact information with the server computer system. Generally, each configuration file includes information which identifies mappings and/or priority rules for mapping data between the vCard format and the data structure and formats of a database of contact information of the server computer system. Also, each configuration file may include information which defines characters that may be allowed or disallowed on a corresponding type of client device, supply substitute characters to be used in place of the disallowed characters, defines maximum field sizes, and provides configuration values relevant to the mapping and/or conversion of data.

The universal mapping system further comprises a universal mapping program having various software components and data objects which are operable, in cooperation, to configure the universal mapping program for operation during a synchronization session based upon the information present in an identified configuration file (i.e., sometimes also referred to herein as a "PIM specification file"). The universal mapping program is operable to read and interpret the information present in the identified configuration file and to construct and destruct, as necessary, programmatic elements (i.e., sometimes also referred to herein as "configuration element handlers") which process particular types of configuration file information and which build other programmatic elements to perform the actual mapping and/or conversion, if necessary, of vCard properties and parameters to/from data fields and values present in the server computer system's database depending on the direction of the synchronization session. Each mapping programmatic element (i.e., sometimes also referred to herein as a "vCard property mapper") is, generally, responsible for mapping a particular vCard property according to information in the identified configuration file. The mapping programmatic elements are adapted to first determine whether the vCard property for which they are responsible has been previously mapped to/from the server computer system's database during a previous synchronization and/or mapping session. If so, the prior mapping is maintained during subsequent sessions unless overridden by new configuration file information. The mapping programmatic elements are then operable to map the vCard property for which they are responsible to/from field(s) of the server computer system's database in accordance with priority rules which may be present in configuration file information. The priority rules may define at least: sub-type, or one-to-one mappings, of a combination of vCard property parameters to/from one system database field; type, or one-to-many, mappings of vCard property parameters to/from a group of system database fields; and, characteristic mappings of vCard property parameters to/from many groups of system database fields and/or many specific system database fields. The mapping programmatic elements are also adapted to store the associations of vCard properties and system database fields made during new mappings for use in subsequent synchronization and/or mapping sessions to maintain prior mappings. Further, the mapping programmatic elements are operable, after performing new mappings, to store unmappable vCard properties during a mapping from a vCard to the system's database and to return the unmappable data during a subsequent mapping from the system's database to a vCard.

The universal mapping system, during operation according to various methods of the present invention, receives the name or other identifier of a configuration file which is to be employed for the mapping of contact information between a vCard associated with a particular type of client device and the server computer system's database. After receiving the name of the configuration file, the universal mapping program parses information present in the identified configuration file and, based at least upon the information, dynamically constructs, destructs, and executes programmatic elements appropriate which process particular types of configuration file information, build appropriate mapping programmatic elements, and define the sequence in which the mapping programmatic elements are to be executed in order to achieve the mappings specified by the identified configuration file. Following the defined sequence, the universal mapping program causes the execution of each of the mapping programmatic elements. Each mapping programmatic element initially attempts to retrieve historical mapping information stored in prior synchronization and/or mapping sessions and, if found, maintains prior mappings by mapping the vCard property for which it is responsible to/from the appropriate server computer system's database field(s) according to the historical mapping information. Then, if no historical mapping information is found, each mapping programmatic element maps the vCard property for which it is responsible to/from the appropriate server computer system's database field(s) following priority rules present in the identified configuration file or default rules present elsewhere. Upon performing such a new mapping, each mapping programmatic element stores the mapping association made between the vCard property and the server computer system's database field(s) as historical mapping information for use during a subsequent synchronization and/or mapping session. If, for some reason, it is not possible for a mapping programmatic element to map the vCard property for which it is responsible to an appropriate field(s) of the server computer system's database, the mapping programmatic element stores the unmappable vCard property parameter(s) and, during a subsequent synchronization and/or mapping session to update contact information at the client device, inserts the unmappable vCard property parameter(s) into a vCard communicated to the client device. Once mapping is completed, the universal mapping program transforms the mapped data into a form suitable for storage in the server computer system's database or for communication, as a vCard, to the client device.

Through the use of configuration files and programmatic elements configured at run time in accordance with information present in a selected configuration file, the universal mapping system provides a flexible approach to the mapping of data between two or more data stores having different storage structures and/or formats. This approach enables the universal mapping system to be advantageously adapted, when employed as part of a synchronization system for synchronizing personal information management, to support new types of client devices through the mere addition of new configuration files respectively designed for the new types of client devices. As a consequence, it is not necessary to perform the costly, time consuming and resource intensive design, programming, testing, and implementation of custom software device drivers in order for the universal mapping system to support the mapping of personal information management data between a new type of client device and a synchronization server system.

Importantly, the universal mapping system also provides the ability to maintain data mappings from previous synchronization and/or mapping sessions, thereby preserving the integrity of a client device's data. The universal mapping system, additionally, enables the beneficial establishment and use of priorities that govern data mapping between data structures, and the persistence of data which significantly minimizes the potential loss of a client device's data that might result because certain client device data may not be mappable. In addition, the universal mapping system advantageously provides for the configuration and implementation of size limits on mapped data to diminish the possibility of a synchronization server computer system sending mapped data to a client device which does not fit, and perhaps exceeds, the limited storage capacity for such data at the client device. Further, the universal mapping system enables the configuration and implementation of lists of characters that are not allowed for storage in a client device and enables the specification of substitute characters therefor, thereby avoiding the sending of mapped data including unacceptable characters to a client device.

Accordingly, it is an object of the present invention to enable the mapping of data between two different data structures and/or formats without expenditure of the resources associated with the development, programming, testing, and implementation of software drivers.

Another object of the present invention is to map data between two different data structures using a configuration file to specify information which controls the mapping process.

Still another object of the present invention is to maintain the integrity of data on a client device before, during, and after a mapping session.

Still another object of the present invention is to enable the prioritized mapping of certain data.

Still another object of the present invention is to avoid the communication of mapped data to a client device which includes data strings having lengths that are too long for storage at the client device.

Still another object of the present invention is to avoid the communication of mapped data to a client device which includes characters which are not storable at the client device.

Still another object of the present invention is to identify the type of client device with which mapping of data is to be performed.

Still another object of the present invention is to enable the mapping of data between a common data structure and/or format and a proprietary data structure and/or format.

Still another object of the present invention is to enable the mapping of personal information management data between the vCard data structure and/or format and a proprietary data structure and/or format of a synchronization server database.

Other objects, features, and advantages of the present invention will become apparent upon reading and understanding the present specification when taken in conjunction with the appended drawings.

In the Drawings;

Fig. 1 displays a block diagram representation of a system architecture for the synchronization of personal information manager data between a synchronization server system and a plurality of client devices in accordance with the preferred embodiment of the present invention.

Fig. 2 displays a block diagram representation of the structure of the universal mapping system of Fig. 1.

Fig. 3 displays a textual representation of an exemplary PIM specification configuration file corresponding to the PIM specification configuration file identified in Fig. 1.

Figs. 4A and 4B display a textual representation of an exemplary PIM specification file corresponding to one of the PIM specification files identified in Fig. 1.

Fig. 5 displays a textual representation of exemplary DevInf DTD data received by the synchronization server system of Fig. 1 from a client device 104.

Fig. 6 displays a flowchart representation of a synchronization method in accordance with the preferred embodiment of the present invention.

Figs. 7A, 7B, and 7C display a flowchart representation of an identification method in accordance with the preferred embodiment of the present invention.

Fig. 8 displays a flowchart representation of a configuration method in accordance with the preferred embodiment of the present invention.

Figs. 9A, 9B, and 9C display a flowchart representation of a mapping method in accordance with the preferred embodiment of the present invention.

Fig. 10A displays a textual representation of an exemplary first vCard of an exemplary synchronization session in which vCard properties are mapped to UC fields in accordance with the preferred embodiment of the present invention.

Fig. 10B displays a textual representation of an exemplary UC record resulting from the mapping of the first vCard of Fig. 10A during an exemplary synchronization session in which vCard properties are mapped to UC fields in accordance with the preferred embodiment of the present invention.

Fig. 10C displays a textual representation of an exemplary second vCard of an exemplary synchronization session in which vCard properties are mapped to UC fields in accordance with the preferred embodiment of the present invention.

Fig. 10D displays a textual representation of an exemplary UC record resulting from the mapping of the second vCard of Fig. 10C during an exemplary synchronization session in which vCard properties are mapped to UC fields in accordance with the preferred embodiment of the present invention.

Fig. 11A displays a textual representation of an exemplary UC record existing prior to an exemplary synchronization session in which UC fields are mapped to vCard properties in accordance with the preferred embodiment of the present invention.

Fig. 11B displays a textual representation of an exemplary vCard resulting from the mapping of the UC fields of Fig. 11A during an exemplary synchronization session in which UC fields are mapped to vCard properties in accordance with the preferred embodiment of the present invention.

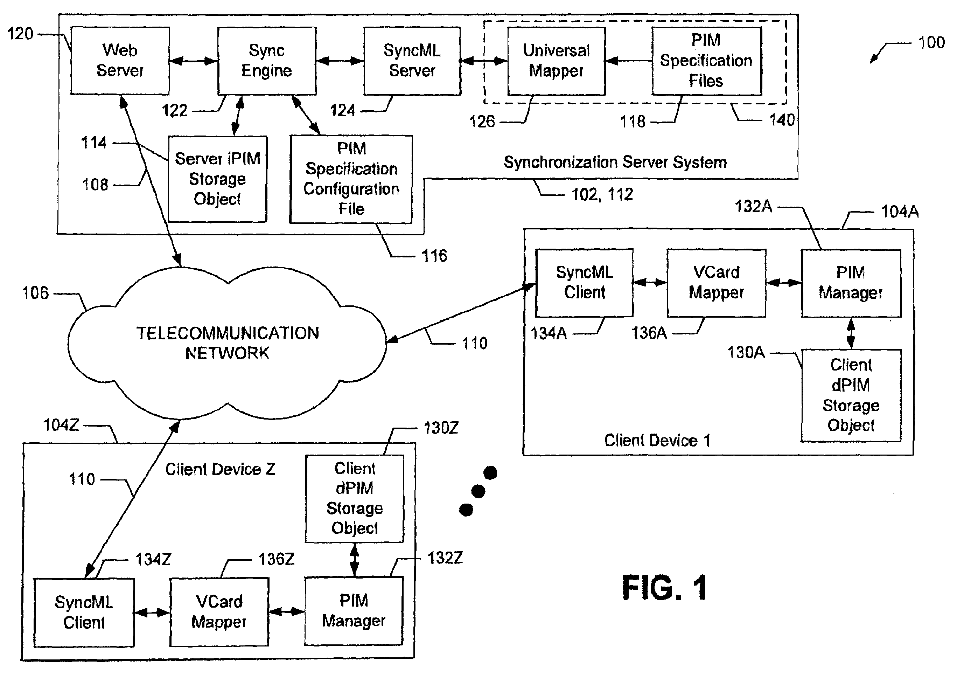

Referring now to the drawings, in which like numerals represent like elements or steps throughout the several views and in which an ellipsis indicates the presence of multiple similar elements, Fig. 1 displays a block diagram representation of a system architecture 100 for the storage, retrieval, communication, and synchronization of personal information manager data (i.e., sometimes also referred to herein as "PIM data", and as "contact information" or "contact data" even though such contact information or contact data, generally, refers to only one form of PIM data). The system architecture 100 comprises a synchronization server system 102, a plurality of client devices 104, a telecommunication network 106, and communication links 108, 110. The synchronization server system 102 is communicable with each client device 104, through the telecommunication network 106 and appropriate communication links 108, 110, to enable the synchronization of PIM data stored by the synchronization server system 102 (i.e., sometimes referred to herein as "iPIM data", "universal contact data", or "UC data") with PIM data stored on the client devices 104 (i.e., sometimes referred to herein as "dPIM data" or "client contact information").

The client devices 104, preferably, comprise Internet-enabled wireless devices having personal information manager applications software which are operable to communicate dPIM data to the synchronization server system 102 and to receive iPIM data from the synchronization server system 102 in the vCard format and through use of the SyncML protocol. Exemplary client devices 104 include, but are not limited to, appropriately configured Internet-enabled wireless telephones, personal digital assistants, and other similar devices available now or in the future. The telecommunication network 106, preferably, includes the Internet and the appropriate facilities thereof. Communication link 108, preferably, comprises a wired bi-directional communication path having multiple channels to enable bi-directional communication berween the synchronization server system 102 and the telecommunication network 106. Communication links 110, preferably, include wireless bi-directional communication paths which enable bi-directional communication between respective client devices 104 and the telecommunication network 106. It should be understood that while the present invention is described in relation to system architecture 100, the scope of the present invention is not limited to wireless client devices 104, to the Internet telecommunication network 104, to wired communication links 108, or to wireless communication links 110, but instead comprises all wired or wireless client devices 104 (including, for example, desktop and mobile personal computers) capable of managing and communicating PIM data in any format and according to any protocol, all telecommunication networks 106 and the infrastructure and facilities thereof, and all wired or wireless communication paths 108, 110 and the facilities thereof.

The synchronization server system 102, according to the preferred embodiment of the present invention, comprises a hardware platform (not shown) having one or more inter-communicable server computer systems appropriately each configured with one or more processors (i.e., or central processing units) for executing software program instructions and manipulating data, one or more memories (i.e., which may physically be part of or separate from the server computer systems) for storing software program instructions and data, and a communication interface which enables the bi-directional communication of data with the telecommunication network 106 via communication link 108 (i.e., and, ultimately, with respective client devices 104 via respective communication links 110). The memory, preferably, comprises many different forms, including for example and not limitation, random access memory, read-only memory, magnetic storage devices, non-magnetic storage devices, optical storage devices, magneto-optical storage devices, and other forms available now or in the future. Exemplary communication interfaces include, without limitation, analog and digital interfaces, wired and wireless interfaces, analog and digital modems, cable modems, ISDN interfaces, optical interfaces, xDSL interfaces, satellite interfaces, and other communication interfaces operable to communicate data as required by the present invention. An appropriately configured server computer system may be available from Compaq Computer Corporation of Houston, Texas and many other server computer vendors. One reasonably skilled in the art should understand the selection, configuration, and operation of a server computer system and, therefore, it is not necessary to describe such details herein.

The synchronization server system 102 further comprises a software and data platform 112 having a multi-tasking, virtual operating system (not shown), a server iPIM storage object 114, a PIM specification configuration file 116, one or more PIM specification files 118, and a plurality of software programs or modules 120, 122, 124, 126 stored or present in a server computer system memory. The multi-tasking, virtual operating system includes a plurality of instructions which, when executed by a processor of the synchronization server system 102, control overall operation of the system 102 and enable various system functions such as, the storage and retrieval of instructions and data (i.e., including iPIM data) from memory, and the communication of requests, commands, and data within and between software programs and devices outside of the synchronization server system 102. An operating system, acceptable according to the preferred embodiment, is the "Windows 2000 Server Operating System" available from Microsoft Corporation of Redmond, Washington. The plurality of software programs or modules 120, 122, 124, 126 implement methods described herein and, generally, include a plurality of instructions which, when executed by a processor of the synchronization server system 102, cause the system 102 to perform certain tasks which are required by those methods and which are related to the communication, mapping, and synchronization of PIM data, or to other operations or functions described herein.

The server iPIM storage object 114, preferably, resides in a non-volatile memory device at the synchronization server system 102 and includes master iPIM data stored in a plurality of universal contact records or objects (i.e., sometimes referred to herein as "UC records" or "UC record objects") having a structure and format which is, generally, different than the structure and format employed by client devices 104 to store dPIM data and different than the structure and format defined by the vCard specification. Each UC record, generally, corresponds to a single vCard. The UC records have a plurality of fields or structures (i.e., sometimes referred to herein as "UC fields") which, preferably, store: mapped contact information such as, for example, a contact's first name, last name, street address, business voice phone number, business facsimile phone number, business email address, home voice phone number, home facsimile phone number, home email address, and mobile phone number); historical association information describing the previous mapping of vCard properties and parameters to/from appropriate UC fields to provide a user of a client device 104 with predicted results and to avoid the loss of PIM data during multiple-point synchronization; and, unmapped contact information which may be present in a vCard, but which is not stored by the server iPIM storage object 114 in a UC field designated solely for a particular type of data (i.e., such as for mapped contact information). Such unmapped contact information may include vCard properties that are not supported or that are supported, but that could not be mapped for various reasons to specific UC fields in a UC record. The unmapped contact information is saved and returned to the client device 104 during a client update operation. Generally, the UC record objects and their data are actually stored, retrieved, and updated by a synchronization engine program 122 described below.

The historical association information is, preferably, stored with each UC record as a history/association table using a name value scheme and a fixed name to enable storage and retrieval of the table. The history/association table, preferably, comprises a vCard slot/line number, a vCard property type, a universal sub-type/field identifier, vCard property parameter characteristics, a value on the client device 104, and an extra storage name. The vCard slot/line number is utilized in an attempt to preserve the order in which properties are received from a vCard (i.e., which may be important to prioritize PIM data during mapping) since vCard properties may span several lines and do not contain unique identifiers. The vCard property type is used by vCard property mappers 206 (described below) to search the history/association table for vCard properties that the mappers 206 are responsible for mapping. The universal sub-type/field identifier stores a value of the UC field to which the data has been synchronized or a value indicating that the vCard property was not synchronized to the UC field, but was stored for subsequent retrieval and return to the client device 104 during a client update. The vCard property characteristics include a bitmap indicating which of the defined vCard property parameters were present in the received vCard. The bitmap is used to reconstruct the vCard property to the same value that was received. The value on the client device 104 represents the value of a vCard property in the format utilized by the client device 104 and is necessary because the format used to store a vCard property in the server iPIM storage object 114 may not be the same as the format preferred by the user of the client device 104. Storage of the value on the client device 104 is also required since vCard properties do not have unique identifiers and, during an update, reliance is necessary on a comparison of data received from a vCard and the stored value in the history/association table. The extra storage name represents the name of a UC field in which vCard property data is stored if the data is not supported by the synchronization server system 102, cannot be mapped to a UC field, or contains extended parameters which cannot be represented internally in the server iPIM storage object 114. The extra storage name is utilized during an update of a client device 104 to retrieve such data and construct a vCard for return to the client device 104.

As described above, the historical association information describes previous mappings of vCard properties and parameters to/from appropriate UC fields to provide a user of a client device 104 with predicted results from the synchronization of PIM data between the server system 102 and the user's client device 104. For example, suppose that during a previous synchronization session, the vCard property "B" is selected for mapping to the server UC field "X" from a group of vCard properties including "A", "B", and "C" in accordance with priority rules described below. By storing the association between (i.e., and mapping of) vCard property "B" and UC field "X" in the history/association table, the association may be retrieved during subsequent synchronization sessions and utilized to cause the mapping of vCard property "B" into UC field "X" during those sessions, thereby preserving the integrity of the PIM data of the client device 104.

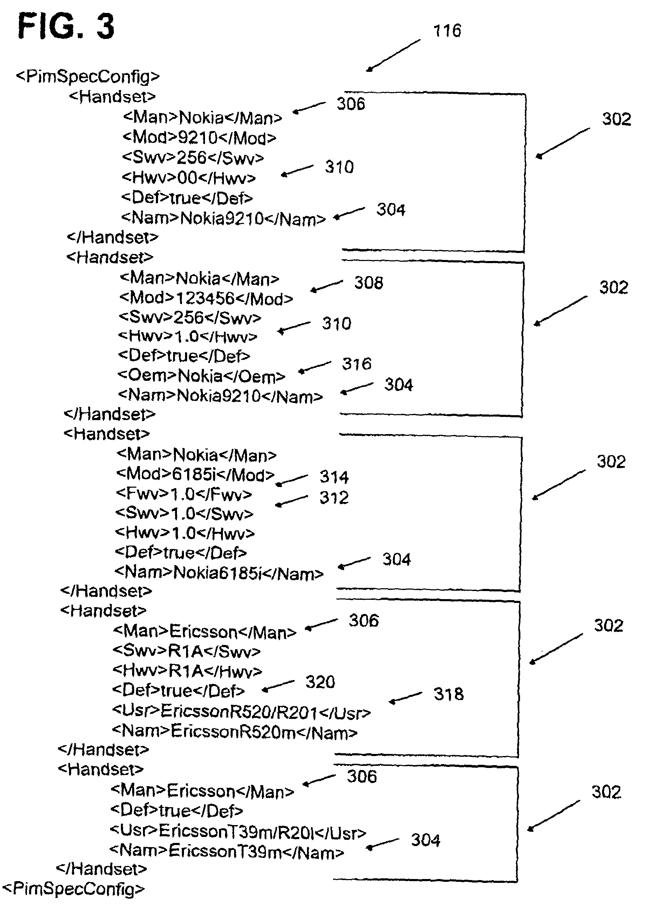

The PIM specification configuration file 116, preferably, resides in a non-volatile memory device of the synchronization server system 102 and includes information utilized by the synchronization engine program 122, as described below, to (i) identify the device type of a client device 104 which desires to synchronize its contact information with the contact information stored in the synchronization server system's iPIM storage object 114, and (ii) select the appropriate PIM specification file 118 corresponding to the identified device type. The PIM specification configuration file 116 is, preferably, formatted in Extensible Markup Language ("XML") and, as depicted in Fig. 3, includes information describing different types of client devices 104. The information is arranged in the form of one or more device entries 302 with each entry 302 being uniquely associated in one-to-one correspondence with only one type of client device 104. Note that while the entries 302 displayed in Fig. 3 are, preferably, associated with types of client devices 104 which are wireless handheld client devices 104 (i.e., mobile telephones), the PIM specification configuration file 116 may include, within the scope of the present invention, entries 302 which are associated with other types of client devices 104 such as, for example and not limitation, Internet-enabled personal digital assistants, desktop computers, and portable computers.

Each entry 302 of the PIM specification configuration file 116, preferably, comprises a name element or tag ("<Nam>") 304 which specifies the name of the PIM specification file 118 to be utilized by a universal mapping program 126 to configure itself, as described below, for the mapping of contact information communicated between an associated type of client device 104 and the synchronization server system 102 according to the SyncML protocol and the vCard specification. As a consequence, once an entry 302 is identified by the synchronization engine program 122 as corresponding to the device type of the client device 104, the name of the PIM specification file 118 is also identified, thereby enabling selection of the appropriate PIM specification file 118 from the plurality of available PIM specification files 118. Each entry 302 also, generally, comprises: a manufacturer element or tag ("<Man>") 306 which identifies the name of the manufacturer of the associated type of client device 104, and a model number element or tag ("<Mod>") 308 which identifies the model number assigned to the associated type of client device 104 by the device's manufacturer. Each entry 302 may additionally contain other elements or tags, including for example and not limitation: hardware, software and version elements or tags ("<Hwv>", "<Swv>", and "<Fwv>") 310, 312, 314 which respectively identify the version of the hardware, software, and firmware present in and being utilized by the associated type of client device 104; an original equipment manufacturer element or tag ("<Oem>") 316 which identifies the name of the original equipment manufacturer of the associated type of client device 104 (i.e., since the associated type of client device 104 may have been produced by one manufacturer, but marketed under a different manufacturer's name); a user agent element or tag ("<Usr>") 318 which identifies the user agent utilized by the associated type of client device 104; and, a default element or tag ("<Def>") 320 which identifies whether the associated entry 302 qualifies as a default entry 302 for use by the universal mapping program 126 in the event that an entry 302 cannot, otherwise, be identified for a particular client device 104.

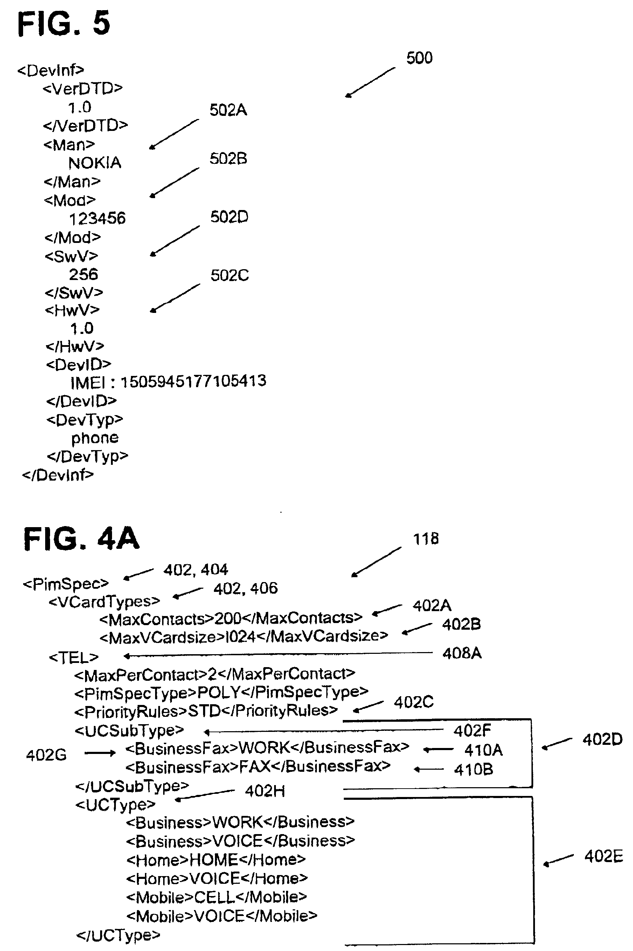

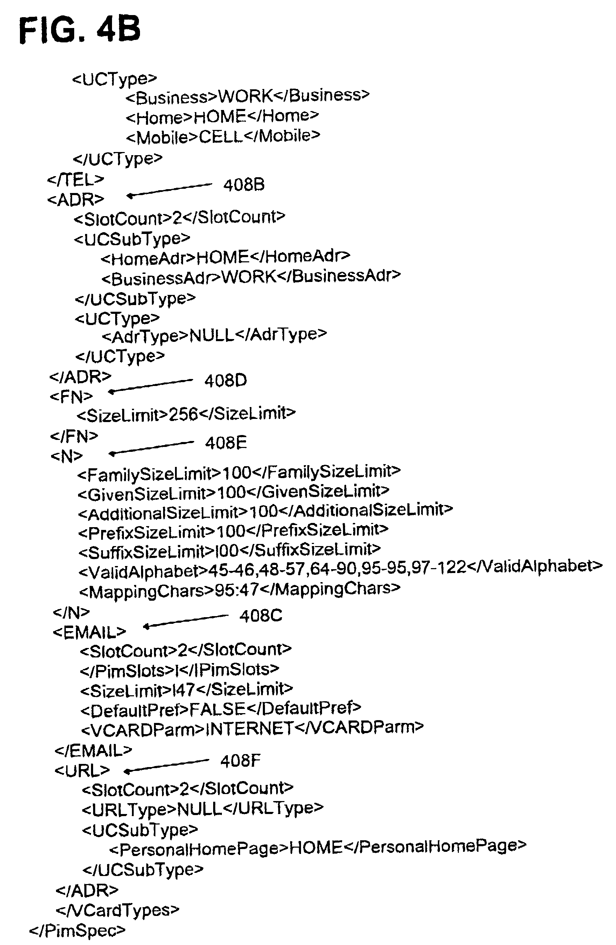

The plurality of PIM specification files 118 of Fig. 1, preferably, reside in a non-volatile memory device of the synchronization server system 102 with each PIM specification file 118 being uniquely associated in one-to-one correspondence with a particular type of client device 104 and with an entry 302 in the PIM specification configuration file 116. Since each type of client device 104 may interchange parameters of a vCard with contact information stored in its dPIM storage object 130 differently than another type of client device 104 (i.e., different client devices 104 may implement the interchange of dPIM data with vCards differently), different PIM specification files 118 are necessary for each respective type of client device 104, but not for different client devices 104 of the same device type. Each PIM specification file 118 is, preferably, formatted in Extensible Markup Language ("XML") and, as illustrated in Figs. 4A and 4B, includes configuration elements 402 which are utilized by the universal mapping program 126 to configure itself for mapping PIM data, in either direction, between the UC records of the server iPIM storage object 114 and the properties of vCards interchanged with the file's associated type of client device 104. The configuration elements 402 of each PIM specification file 118 include, for example and not limitation, information identifying the vCard properties which are mapped for the associated type of client device 104, definitions of mappings between UC fields and vCard properties, priority rules to apply during mapping, individual mapping component attributes, size limits and allowed alphabetic characters for particular fields of the client device's dPIM storage object 130, and character mappings for alphabetic characters that are not allowed in particular fields of the client device's dPIM storage object 130.

Before proceeding with a more detailed description of the configuration elements 402 allowable in a PIM specification file 118, it should be remembered that vCards are organized into properties, including, TEL, ADR, EMAIL, and various other properties. Each property is broken down into property parameters such as WORK, VOICE, and property specific values. Due at least in pan to a vCard's use of such properties and parameters, the mapping definitions between UC fields and vCards, generally, include configuration elements 402 that reference the vCard properties and parameters. Exemplary vCard property parameters that are supported by the universal mapping program 126 include: POSTAL, PARCEL, PREF, CELL, MSG, HOME, WORK, FAX, VOICE, INTERNET, AOL, APPLELINK, ATTMAIL, CIS, EWORLD, MODEM, CAR, ISDN, VIDEO, PCS, IBMMAIL, MCIMAIL, POWERSHARE, PRODIGY, TLX, QP, DOM, INTL, BBS, PAGER, X400, and NULL.

The exemplary PIM specification file 118 of Figs. 4A and 4B comprises a header element 404 ("<PimSpec>") and a top level vCard-based element 406 ("<VCardTypes>") which allow, respectively, for future expansion and inclusion of other configuration elements 402 that may not be PIM related and non-vCard-based elements (i.e., configuration elements 402 which may enable configuration of the universal mapping program 126 to map information pertaining to calendars/appointments ("ICal" elements), to do lists, and various other PIM-type applications. The PIM specification file 118 also comprises attributes 408 for the general purpose mapping components that are mapped from/to the file's associated type of client device 104. If an attribute 408 related to a particular UC field or vCard property is not present in the PIM specification file 118, the particular UC field or vCard property will not be mapped by the universal mapping program 126. Such attributes include, but are not limited to: a telephone number attribute 408A ("<TEL>"); an address attribute 408B ("<ADR>"); an electronic mail address attribute 408C (""<EMAIL">); a full name attribute 408D ("<FN>"); a name attribute 408E ("<N>"); and, a universal resource locator attribute 408F ("<URL>"). Other supported, but not shown attributes 408 include, for example and not limitation: a note attribute ("<NOTE>"); a birthday attribute ("<BDAY>"); a nickname attribute ("<NICKNAME>"); an organization attribute ("<ORG>"); and, a title attribute ("<TITLE>").

The top level vCard-based element 406, as seen in Figs. 4A and 4B, supports a maximum number of contacts configuration element 402A ("<MaxContacts>") and a maximum vCard size configuration element 402B which, respectively, identify the maximum number of contacts and the maximum size, in bytes, of a vCard supported by the associated type of client device 104. Similarly, each of the attributes 408 supports particular configuration elements 402 which are related to the attribute and which provide information necessary during mapping operations. Some attributes 408 support configuration elements 402 which include, but are not limited to, information which identifies the type of mapping and priority rules to be employed by the universal mapping program 126. Priority rules are necessary to guide the universal mapping program 126 in the selection of UC fields during mapping and must be present when a type of client device 104 has a PIM specification file 118 that is limited in respect to the server PIM. Priority rules may be hard-coded within the source code of the universal mapping program 126, but may also comprise custom priority tables associated with an attribute 408. Such priority rules and tables may be defined for "inbound" mapping (i.e., mapping vCard properties and their combination of property parameters to a single UC field) and for "outbound" mapping (i.e., mapping from a UC field to a vCard property). The need for priority rules may be explained by considering the exemplary situation that arises when vCard properties "A", "B", and "C" may be mapped into UC field "X", but there is no logical reason to concatenate the properties. Through the use of priority rules, one of the vCard properties maybe chosen for mapping to the UC field "X".

In further example, the telephone number attribute 408A ("<TEL>") supports a priority rules configuration element 402C ("<PriorityRules>") which identifies whether standard priority rules are to be applied by the universal mapping program 126 when performing mapping operations. The telephone number attribute 408A and certain other attributes 408 may also include, as seen in Figs. 4A and 4B, custom priority rules which are specified in the form of a priority sub-type table 402D or priority type tables 402E. A priority sub-type table 402D is defined by a universal contact sub-type configuration element 402F ("<UCSubType>") and identifies the sub-type, or one-to-one, custom mapping used when a vCard property and its combination of property parameters is to be uniquely mapped to a single UC field or when mapping from a UC field to a vCard. Such one-to-one mapping has priority over other forms of supported mapping, including type mapping described below. As seen in Fig. 4A, the universal contact sub-type configuration element 402F references an exemplary "BusinessFax" configuration element 402G for a UC record to specify a mapping of the vCard WORK and FAX property parameters 410A, 410B to the BusinessFax field of a UC record. Other exemplary configuration elements 402 for fields of a UC record include, but are not limited to: Assistant, Business, Business2, Callback, Car, Company, Home, Home2, HomeFax, Isdn, Mobile, Other, OtherFax, Pager, Primary, Radio, and Telex.

A priority type table 402E is defined by a universal contact type configuration element 402H ("<UCType>") and identifies the type mapping used when a combination of vCard property parameters are mapped to a group (i.e., type) of UC fields of a UC record. The UC fields of each group are, typically, arranged according the order in which the UC fields are to be selected for mapping of vCard property parameters by the universal mapping program 126 with the highest priority fields being at the top of the definition. The types and fields for each type are defined as configuration elements 402 which are recognized by a PIM specification file parser 202 described below. Exemplary UC Types and their respective UC fields (i.e., in parenthesis) which are recognized by the parser 202 include: Primary (Primary); Business (Business, Business2, Assistant, Company); Home (Home, Home2, Callback); Mobile (Mobile, Car); Fax (BusinessFax, HomeFax, OtherFax); Pager (Pager); Other (Other); ISDN (Isdn); Radio (Radio); Telex (Telex); and, TTY (Tty).

According to the preferred embodiment and as displayed in Fig. 1, the software and data platform 112 of the synchronization server system 102 includes a web server program 120 (i.e., sometimes also referred to herein as "web server 120") having computer software instructions which, when executed by a processor of the system 102, enables bi-directional communication of vCards with the plurality of client devices 104 through telecommunication network 106 and communication links 108, 110. The web server 120 also, preferably, provides an Internet web site interface for interaction with the client devices 104 via the web site interface. The software and data platform 112 of the synchronization server system 102 also includes a synchronization engine program 122 (i.e., sometimes also referred to herein as "sync engine 122") which, when executed by a processor of the system 102, is operable to store and retrieve UC records in and from the server iPIM storage object 114. The sync engine 122 is also operable to identify, select, and communicate (i.e., to the universal mapping program 126) the name of a PIM specification file 118, in accordance with methods described below, which is appropriate for a client device 104 desiring to synchronize its dPIM data with the master iPIM data of the synchronization server system 102.

The software and data platform 112 of the synchronization server system 102 additionally comprises a SyncML server program 124 (i.e., sometimes also referred to herein as "SyncML server 124") having computer software instructions which, when executed by a processor of the system 102, is operable to call the universal mapping program methods MapToUC () and MapTovCard () upon receipt of a vCard or a request for an update of the dPIM data of a client device 104 received from the web server 120 and the sync engine 122, and to thereby initiate mapping of PIM data between the server iPIM storage object 114 and a vCard. The SyncML server 124 is also operable to handle protocol conversion and/or related tasks associated with the communication of vCards via the SyncML protocol. The software and data platform 112 further comprises a universal mapping program 126, described in more detail below, which enables the bi-directional mapping of PIM data between a vCard and the master iPIM storage object 114. Together, the universal mapping program 126 and the plurality of PIM specification files 118 form the universal mapping system 140.

In accordance with the preferred embodiment of the present invention, each client device 104, preferably, comprises a hardware platform (not shown) having a processor for executing software program instructions and manipulating data, one or more memories for storing software program instructions and data, one or more user interfaces (i.e., keypad, display, microphone, speaker), and a communication interface which enables the bi-directional communication of data (i.e., in the form of vCards) with the telecommunication network 106 via a communication link 110 (i.e., and, ultimately, with the synchronization server system 102 via communication link 108). Each client device 104 also, preferably, comprises a software and data platform 128 including a client dPIM storage object 130 for storing dPIM data associated with contacts of the device's user, and a plurality of software programs having software instructions which cause the client device 104 to perform certain tasks and provide certain functionality when executed by the device's processor. The plurality of software programs comprises a personal information manager program 132 (i.e., sometimes also referred to herein as "PIM manager 132") for enabling the device's user to locally input, delete, edit, and view dPIM data, to initiate PIM data synchronization with the synchronization server system 102, and to store and retrieve dPIM data in and from the client dPIM storage object 130. The plurality of software programs also comprises a SyncML client software program 134 (i.e., sometimes also referred to herein as "SyncML client 134") and a vCard mapping software program 136 (i.e., sometimes also referred to herein as "vCard mapper 136") which, preferably, work in conjunction with the PIM manager 132 to synchronize PIM data in the client dPIM storage object 130 and the server iPIM storage object 114. The SyncML client 134 and vCard mapper 136 are, respectively, operable to enable the bi-directional communication of vCards with the telecommunication network 106 (i.e., and, ultimately, with the synchronization server system 102) via the SyncML protocol, and to bi-directionally map PIM data between a vCard and the client dPIM storage object 130.

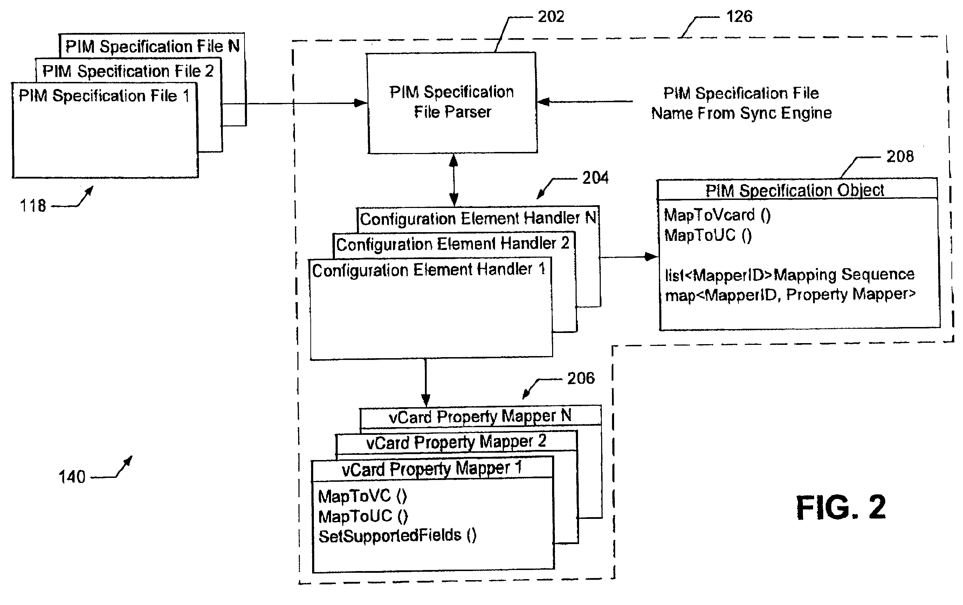

Fig. 2 displays a block diagram representation of the universal mapping system 140 according to the preferred embodiment of the present invention. The universal mapper 126, described briefly above, is a component of the synchronization server system 102 that is responsible for the bi-directional mapping of contact information stored in a dPIM storage object 130 of a client device 104 and contact information stored in the iPIM storage object 114 of the synchronization server system 102, with the contact information of both storage objects 114, 130 being exchanged, preferably, in the form of vCards communicated therebetween via the SyncML protocol. The universal mapper 126 is designed as a framework from which standard vCard mapping objects are configurable to perform mappings specific to a type of client device 104 and to which custom mapping objects may be added at various times. The client specific mappings are defined by a PIM specification file 118, described above, that is identified and communicated (i.e., by name) to the universal mapper 126 by the sync engine 122. The PIM specification file 118 provides the universal mapper 126 with configuration elements which describe properties for the mapping objects, in addition to unique mappings of vCard properties and parameters to fields of the UC records of the server iPIM storage object 114.

In accordance with the preferred embodiment of the present invention, the universal mapper 126 comprises a PIM specification file parser 202, a plurality of configuration element handlers 204, a plurality of vCard mapping objects 206 (i.e., sometimes also referred to herein as "vCard property mappers 206"), and a PIM specification object 208. The PIM specification file parser 202 is, preferably, an event-based parser which is operable to parse the configuration elements 402 of a PIM specification file 118 upon receipt of the name of the PIM specification file 118 from the sync engine 122. The PIM specification file parser 202 is operable to identify or detect a previously sub-classed event (i.e., such as, for example and not limitation, the start of an element, the end of an element, or the presence of character data) in the PIM specification file 118 and to, upon such detection, call a configuration element handler 204 for that event. During operation, the PIM specification file parser 202 configures itself by building a stack of configuration element handlers 204 that are responsible for processing each particular configuration element 402 of the PIM specification file 118 or for constructing one or more sub-handlers for the configuration element 402. Each configuration element handler 204 is, generally, designed to process a single configuration element 402, to construct appropriate sub-handlers as necessary to process the configuration element 402, and to destruct the sub-handlers when processing of the configuration element 402 is complete. The configuration element handlers 204 are also, generally, designed to retrieve and store configuration element values that are used to construct vCard property mappers 206, and to add unique identifiers associated with the mappers 206 to a list of vCard property mappers 206 of the PIM specification object 208. The list of vCard property mappers 206 defines the sequence in which the mappers 206 are called during mapping operations described below. The PIM specification object 208, generally, holds the specific mapping properties and objects for a particular type of client device 104, and also includes a map which is utilized to retrieve the mappers 206 based on the identifiers present in the list of vCard property mappers 206.

Each vCard property mapper 206 is, preferably, operable to map or transform a vCard property to or from a UC field of a UC record of the iPIM storage object 114 and includes methods for performing such transformation in either direction (i.e., MapToUC () and MapToVC ()). Each vCard property mapper 206 receives appropriate configuration element data (i.e., including, for example and not limitation, size limits, allowable and/or mapped characters, maximum allowable number of fields of the same type, and priorities between types) from the parsing of the PIM specification file 118 and utilizes the data to perform appropriate mapping. Once an association has been established between a UC field of a UC record and a vCard property (and, hence, between iPIM and dPIM data fields), each vCard property mapper 206 causes storing of the association in the iPIM storage object 114 in the history/association table associated with each respective UC record and attempts to preserve that association in future mappings until an update is made that breaks the association. The vCard property mappers 206 are operable to give such an association priority over the mapping of new vCard properties and UC record fields. The vCard property mappers 206 are farther operative to cause the storing of unmapped vCard properties and parameters in the UC field of a UC record (i.e., identified by the extra storage name of the history/association table) to enable their return to a client device 104 upon updating of contact information on the client device 104.

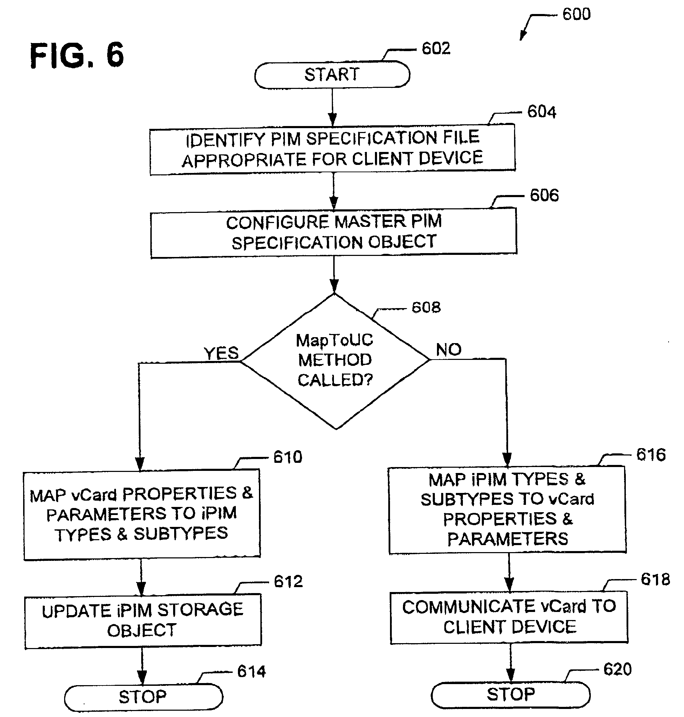

In operation, the synchronization server system 102 and its various component programs function in accordance with methods of the preferred embodiment of the present invention described herein. As illustrated in the flowchart representation of a synchronization method 600 displayed in Fig. 6, the synchronization server system 102 initiates a synchronization session, at step 602, when the server 102 receives a vCard from a client device 104 that has constructed the vCard from its dPIM data (i.e., through appropriate operation of the client device's PIM manager 132 and vCard mapper 136) and has submitted the vCard to the synchronization server system 102 through operation of the client device's SyncML client 134 and communication of the vCard to the server 102 via telecommunication network 106 and communication paths 108, 110. Upon receipt of the vCard via the server's web server 120, the vCard is communicated internally to the server's sync engine 122, SyncML server 124, and universal mapper 126. Initiation of a synchronization session may also occur as a result of a request for updating of a client device 104 being made. Regardless of the event causing initiation of the synchronization session and the direction of the synchronization, operation of the synchronization server system 102 is substantially the same.

Next, at step 604, the sync engine 122 attempts to identify a PIM specification file 118 which corresponds to the device type of the client device 104 that submitted the vCard to the synchronization server system 102. As described in more detail below with respect to the preferable identification method 700, the sync engine 122 receives device identification data from the submitting client device 104 in the form of DevInf DTD data 500 displayed in Fig. 5. Such receipt may be in response to a request for the identification data forwarded to the client device 104 from the sync engine 122. Note that the DevInf DTD data 500, preferably, includes elements or tags 502 corresponding to many of the elements or tags of entries 302 of the PIM specification configuration file 116. For instance, the DevInf DTD data 500 includes both manufacturer and model elements 502A, 502B which correspond to the manufacturer and model elements 306, 308 of the PIM specification configuration file 116. Similarly, the DevInf DTD data 500 includes hardware and software version elements 502C, 502D which correspond to the hardware and software version elements 310, 312 of the PIM specification configuration file 116. The sync engine 122 utilizes the correspondence between elements in accordance with identification method 700 to identify the name of a PIM specification file 118 appropriate for the device type of the client device 104.

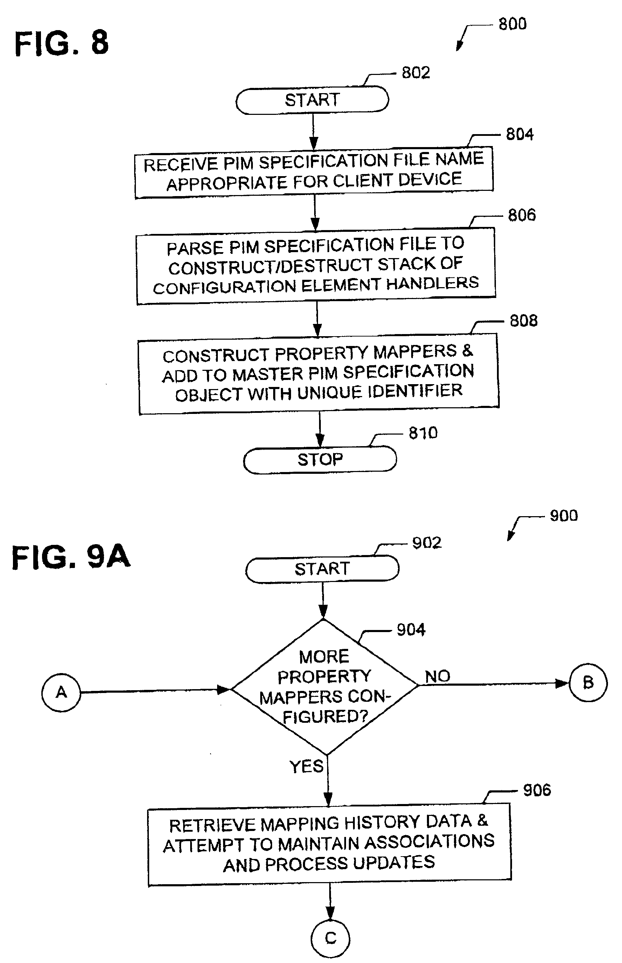

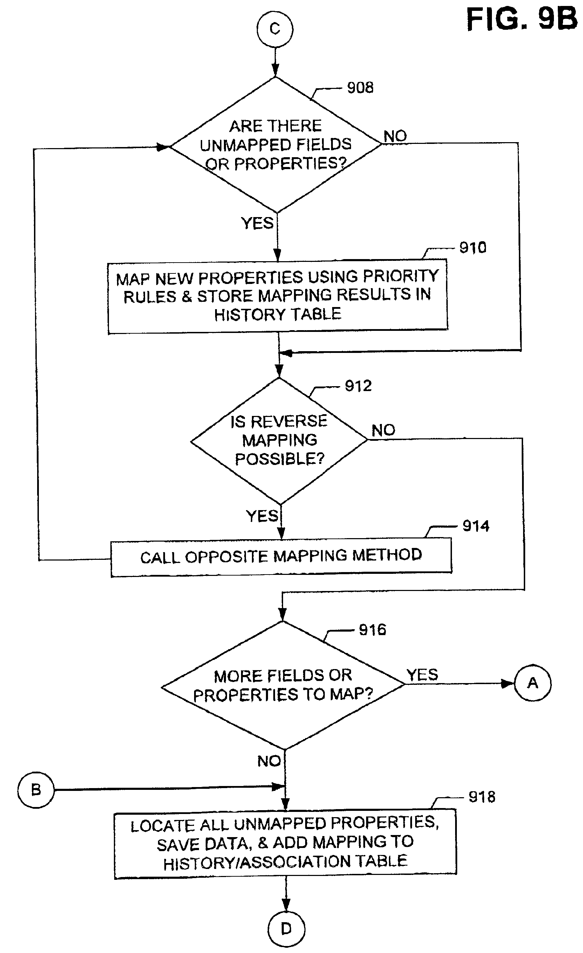

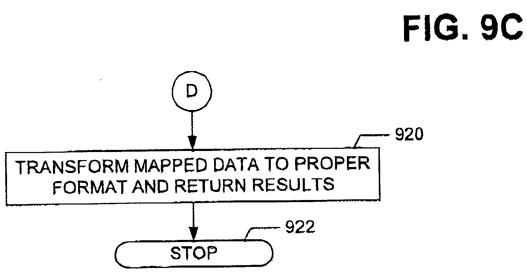

Once the sync engine 122 has identified the name of the PIM specification file 118 corresponding to the client device type, the SyncML server 124 initiates mapping operations by calling the appropriate universal mapper method, MapToUC (i.e., to map vCard properties to fields of a UC record) or MapToVCard (i.e., to map fields of a UC record to vCard properties), and by passing the name of the previously identified PIM specification file 118 to the universal mapper 126. In response, the universal mapper 126, at step 606, configures itself for mapping operations, in the direction appropriate for the method called by the SyncML server 124, according to a configuration method 800 displayed in Fig. 8 and described below. Then, at step 608, the synchronization method 600 branches to cause operation of the synchronization server system 102 according to the direction of mapping. If PIM data is to be mapped from a vCard to a UC record (i.e., the MapToUC method was called by the SyncML server 124), the universal mapping program 126, at step 610, maps vCard properties and parameters to a UC record object having iPIM types and sub-types and passes the UC record object. A detailed description of the employed mapping method 900 is described below with reference to Fig. 9. Then, at step 612, the sync engine 122 updates the server's iPIM storage object 114 with the data from the UC record object and, at step 614, terminates synchronization operations. If, at step 608, PIM data is to be mapped from a UC record to a vCard (i.e., the MapToVCard method was called by the SyncML server 124), the universal mapper 126, at step 616, maps fields of a UC record having iPIM types and sub-types into vCard properties and parameters (see Fig. 9) and passes the vCard to the SyncML server 124 for communication of the vCard, at step 618, to the client device 104 using the SyncML protocol. The synchronization method 600 then terminates at step 620.

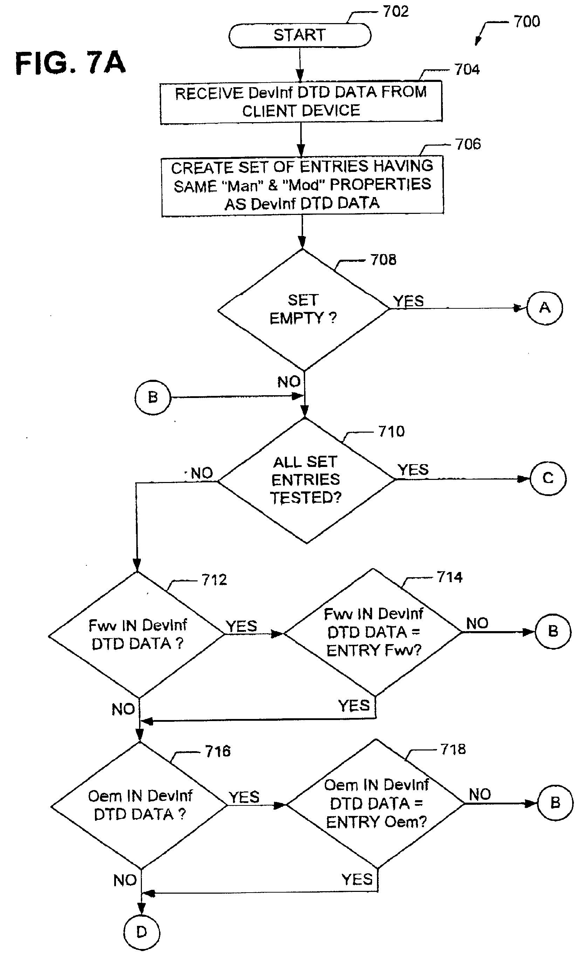

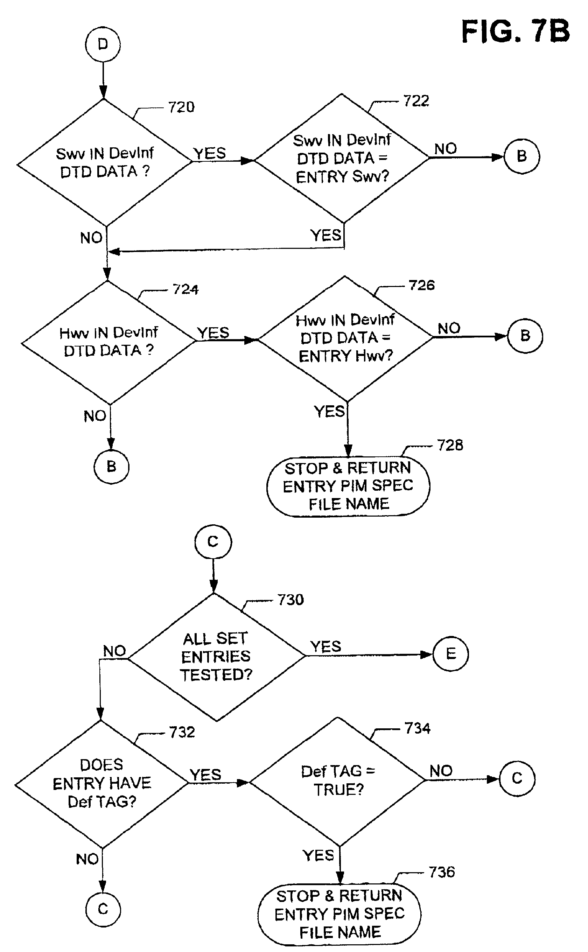

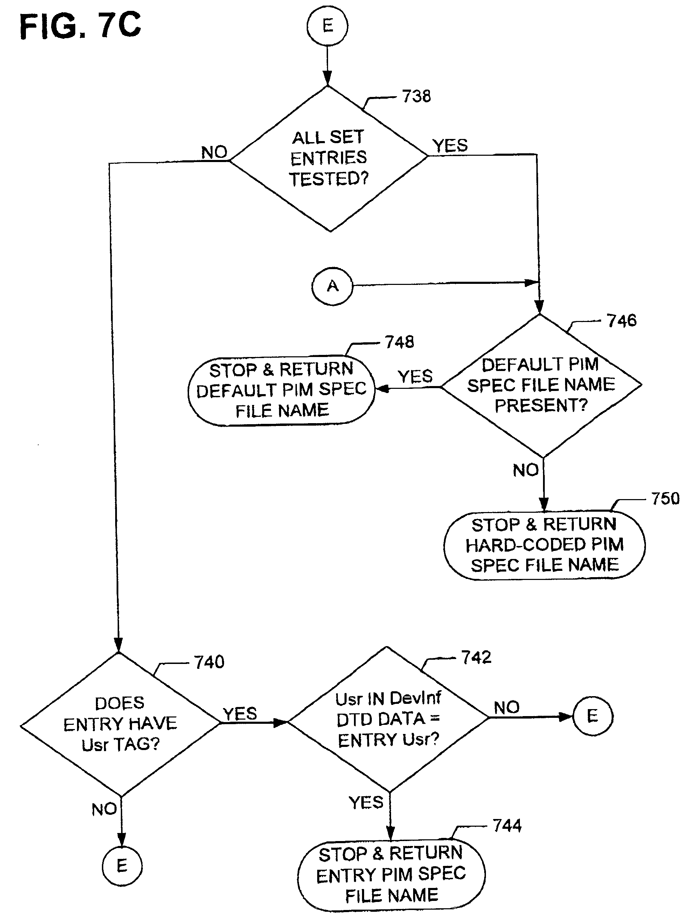

As described briefly above, the sync engine 122 operates according to a preferred identification method 700 in an attempt to identify a PIM specification file 118 which corresponds to the device type of the client device 104 that submitted the vCard to the synchronization server system 102. Figs. 7A, 7B, and 7C display a flowchart representation of the preferred identification method 700. After starting at step 702, the method 700 proceeds to step 704 where the sync engine 122 receives device identification data from the submitting client device 104 in the form of DevInf DTD data 500 similar to that displayed in Fig. 5. Then, at step 706, the sync engine 122 uses the manufacturer and model elements 502A, 502B of the DevInf DTD data 500 and the PIM specification configuration file 116 to create a list, or set, of entries 302 from the PIM specification configuration file 116 having values for manufacturer and model number elements 306, 308 that match the values for the manufacturer and model number elements 502A, 502B. The sync engine 122, at step 708, determines whether the list, or set, of entries 302 is empty. If so, the sync engine 122 branches to step 746 described below. If not, the sync engine 122 proceeds to step 710 where it determines whether each entry 302 of the set has been tested for matches of the entry's firmware version, original equipment manufacturer name, software version, and hardware version elements 314, 316, 312, 310 with similar elements of the DevInf DTD data 500.

If, at step 710, the sync engine 122 determines that all entries of the set of entries 302 have been tested, the sync engine 122 branches to step 730 described below. Alternatively, if the sync engine 122 determines that all of the set of entries 302 have not been tested, the sync engine 122 advances to step 712 where it begins testing associated with the next entry 302 of the created set of entries 302 by determining whether the received DevInf DTD data 500 includes a firmware version element. If not, the sync engine 122 branches to step 716 described below. If so, the sync engine 122 branches to step 714 where it decides whether the value of firmware version element of the DevInf DTD data 500 matches the value of the firmware version element 314 of the entry 302. If no match is found, the sync engine 122 returns to step 710 described above. If a match is found, the sync engine 122 continues at step 716 where it ascertains whether an original equipment manufacturer element is present in the DevInf DTD data 500. If no original equipment manufacturer element is present, the sync engine 122 advances to step 720 described below. If an original equipment manufacturer element is present in the DevInf DTD data 500, the sync engine 122 branches to step 718 where it decides whether the value of the original equipment manufacturer element in the DevInf DTD data 500 matches the value of the original equipment manufacturer element 316 for the entry 302 of the created set of entries 302 which is being tested, If no match is found, the sync engine 122 returns to step 710 described above. If a match is found, the sync engine 122 continues testing of the entry 302 at step 720.

The sync engine 122, at step 720, ascertains whether the received DevInf DTD data 500 includes a software version element. If not, the sync engine 122 branches to step 724 described below. If so, the sync engine 122 branches to step 722 where it decides whether the value of software version element of the DevInf DTD data 500 matches the value of the software version element 312 of the entry 302 of the set of entries 302 being tested. If no match is found, the sync engine 122 returns to step 710 described above. If a match is found, the sync engine 122 continues at step 7724 where it determines whether a hardware version element is present in the DevInf DTD data 500. If no hardware version element is present, the sync engine 122 returns to step 710 described above. If a hardware version element is present in the DevInf DTD data 500, the sync engine 122 decides, at step 726, whether the value of the hardware version element in the DevInf DTD data 500 matches the value of the hardware version element 310 of the entry 302 being tested. If no match is found, the sync engine 122 loops back to step 710 described above. If a match is found, the entry 302 being tested corresponds to the type of client device 104 identified by the DevInf DTD data 500. Then, at step 728, sync engine 122 returns the name of the PIM specification file 118 found in the name element 304 of the entry 302 being tested and ceases operation according to the identification method 700.

At step 730, the sync engine 122 begins operation in accordance with a portion of the identification method 700 which checks each entry 302 of the list, or set, of entries 302 created at step 706 to identify the first entry 302 which qualifies as a default entry (i.e., an entry 302 having a default element 320 with a value of "true"). The sync engine 122 determines, at step 730, whether all entries 302 of the created list of entries 302 have been tested. If so, the sync engine 122 advances to step 738 described below. If not, the sync engine 122, at step 732, tests the next entry 302 and decides whether the entry 302 has a default element 320. If the entry 302 has no default element 320, the sync engine 122 returns to step 730 described above. If the entry 302 has a default element 320, the sync engine 122 examines the value of the default element 320 and determines whether the value is "true". If not, the sync engine 122 loops back to step 730 described above. If so, the sync engine 122 returns the name of the PIM specification file 118 found in the name element 304 of the entry 302 being tested and stops operation in accordance with the identification method 700.

At step 738, the sync engine 122 initiates operation according to a portion of the identification method 700 which ascertains whether any of the entries 302 of the created list of entries 302 has a user agent element 318. The sync engine 122 decides, at step 738, whether all of the entries 302 of the created list of entries 302 have been tested. If not, the sync engine 122 determines, at step 740, whether the entry 302 being tested has a user agent element 318. If no user agent element 318 is found, the sync engine 122 returns to step 738 described above. If a user agent element 318 is found, the sync engine 122 decides whether the value of the user agent element 318 matches the value of the user agent element of the received DevInf DTD data 500. If there is no match, the sync engine 122 loops back to step 738 described above. If a match is found, the sync engine 122 returns the name of the PIM specification file 118 present in the name element 304 of the entry 302 being tested and terminates operation according to the identification method 700.

If the sync engine 122 decides at step 738 that all entries 302 of the created list of entries 302 have been tested, the sync engine 122, at step 746, determines whether a default PIM specification file name variable has a value. If so, the sync engine 122 stops operation in accordance with the identification method 700 at step 748 and returns the name stored in the default PIM specification file name variable as the name of the PIM specification file 118 to be employed during configuration of the universal mapper 126 as described below. If not, at step 750, the sync engine 122 stops operation according to the identification method 700 and returns a hard-coded PIM specification file name as the name of the PIM specification file 118 to be used dunng configuration of the universal mapper 126.

Fig. 8 displays a configuration method 800 utilized and implemented by the universal mapper 126, described briefly above, to configure itself and the PIM specification object 208 in accordance with the preferred embodiment of the present invention. After starting operation according to the configuration method 800 at step 802, the universal mapper 126 receives the name of the PIM specification file 118 from the sync engine 122 which the sync engine 122 has determined to appropriate for use with the type of client device 104 with which synchronization of PIM data is to occur. Then, at step 806, the PIM specification file parser 202 of the universal mapper 126 processes the PIM specification file 118 identified by the sync engine 122. The parser 202 identifies and parses configuration elements 402 present in the PIM specification file 118 and detects previously sub-classed events (i.e., such as, for example and not limitation, the start of an element, the end of an element, or the presence of character data) in the PIM specification file 118. Upon detecting a configuration element 402 and/or a sub-classed event, the parser 202 configures the universal mapper 126 by constructing a stack of configuration element handlers 204 that are responsible for processing the configuration element 402. Each configuration element handler 204 of the stack processes the configuration elements 402 that it is responsible for (i.e., and no other configuration elements 402), constructs appropriate sub-handlers that it needs to process the configuration elements 402, and destructs the sub-handlers when processing of the configuration elements 402 are complete.

Continuing at step 808 of the configuration process 800, the configuration element handlers 204 retrieve and store configuration element values from the PIM specification file 118 which are associated the configuration elements being processed, or handled, by the handlers 204. Then, the configuration element handlers 204 construct vCard property mappers 206 to map respective vCard properties to or from a respective UC field(s) of a UC record of the iPIM storage object 114. Such construction includes the creation of vCard property mappers 206 having methods for performing the mapping of PIM data in either direction (i.e., MapToUC () and MapToVC ()), and the provision of the retrieved configuration element values (i.e., including, for example and not limitation, data related to size limits, allowable and/or mapped characters, maximum allowable number of fields of the same type, and mapping priority rules) to the vCard property mappers 206. Next, the universal mapper 126 adds unique identifiers associated with the mappers 206 to a list of vCard property mappers 206 of the PIM specification object 208 in the sequence in which the mappers 206 are called during mapping operations described below. The universal mapper 126 also adds mapping information to the PIM specification object 208 to enable retrieval of the mappers 206 based on the identifiers present in the list of vCard property mappers 206. After adding the mapping information to the PIM specification object 208, the universal mapper 126 ceases operation in accordance with the configuration method 800 at step 810.

Figs. 9A, 9B, and 9C depict a mapping method 900 of the preferred embodiment which is utilized and implemented by the universal mapper 126 to map PIM data in the direction (i.e., to/from vCard) associated with the universal mapper method, MapToUC or MapToVCard, called by the SyncML server 124 as described above. Broadly, the mapping method 900 comprises steps of calling each configured vCard property mapper 206 and allowing each vCard property mapper 206 to process the vCard property for which it is responsible. Then, for unmapped properties, the respective PIM data is stored as unmappable data and added to the history/association table. More specifically, after starting operation according to the mapping method 900 at step 902, the universal mapper 126 examines the list of vCard property mappers of the PIM specification object 208 and determines whether all of the configured vCard property mappers 206 have been called. If so, the universal mapper 126 branches to step 918 described below. If not, the universal mapper 126 utilizes the list and mapping information of the PIM specification object 208 to call, or retrieve, the next vCard property mapper 206 in the sequence identified by the list and the appropriate MapToXX method of the mapper 206 according to the direction of the synchronization session.

Continuing at step 906, the called vCard property mapper 206 searches the history/association table for a match on the property name, parameters, and actual data in an attempt to identify the mapping(s) that were made, if any, during the previous synchronization session(s) for the field(s) and/or vCard property for which the called vCard property mapper 206 has mapping responsibility. If a previous mapping(s) is identified, the vCard property mapper 206 retrieves history data from the history/association table, and maps and/or formats the vCard property parameter(s) and field(s) for which it is responsible according to the previous mapping history data, thereby maintaining previously made associations of PIM data between the server iPIM storage object 114 and a vCard from a client device 104. If the synchronization direction is from the server 102 to a client device 104 (i.e., the client device's PIM data is being updated), the vCard property mapper 206 retrieves PIM data from the history/association table that was unmappable to the server iPIM storage object 114 during a previous synchronization session, processes such PIM data as necessary, and adds the processed PIM data to the resultant data to be returned at step 920 described below.

Upon the completion of mapping and updating tasks according to previous mapping history data or if no previous mapping(s) is identified at step 906, the vCard property mapper 206, at step 908, ascertains whether there is a previously unmapped (i.e., unsynced) property or field(s) for which it is responsible. If not, the vCard property mapper 206 advances to step 912 described below. If so, at step 910, the vCard property mapper 206 maps and formats the previously unmapped property or field(s) using the priority rules, if any, present in the PIM specification file 118, default priority rules, and/or configuration element values (i.e., including, for example and not limitation, values related to size limits, and allowable and/or mapped characters) with which the mapper 206 was configured during configuration of the universal mapper 126. Then, the vCard property mapper 206 stores the mapping results in the history/association table for use in a subsequent synchronization session. After mapping the previously unmapped property or field(s) and storing the mapping results, the vCard property mapper 206 proceeds to step 912 of the mapping method 900.

At step 912, the vCard property mapper 206 decides whether any reverse mapping is possible (i.e., in the opposite direction of the synchronization session). If not, operation of the universal mapper 126 branches to step 916 described below. If so, at step 914, the vCard property mapper 206 calls the appropriate mapping method, MapToXX, which maps PIM data in a direction opposite to that of the present synchronization session and, if possible, populates PIM data in the reverse direction into a field(s) or property that has become available as a result of the synchronization session. The vCard property mapper 206 then loops its operation back to step 908 described above.

At step 916, the universal mapper 126 determines whether there are any more properties or fields to map. If so, the universal mapper 126 branches operation back to step 904 described above. If not, at step 918, the universal mapper 126 locates all unmapped properties and/or field(s), saves the associated PIM data in the history/association table, and updates the history/association table accordingly to account for and persist the unmapped PIM data and allow its return, to a client device 104, in a future synchronization session which updates the client device 104. Then, at step 920, the universal mapper 126 transforms the mapped data to the proper format for the direction of the synchronization session (i.e., places the mapped data into a UC record object or a vCard) and returns the resulting transformed and mapped data (i.e., resultant data) to the sync engine 122 and/or SyncML server 124, as appropriate, for updating of the server iPIM storage object 114 or communication to the client device 104. The universal mapper 126 terminates operation in accordance with the mapping method 900 at step 922.

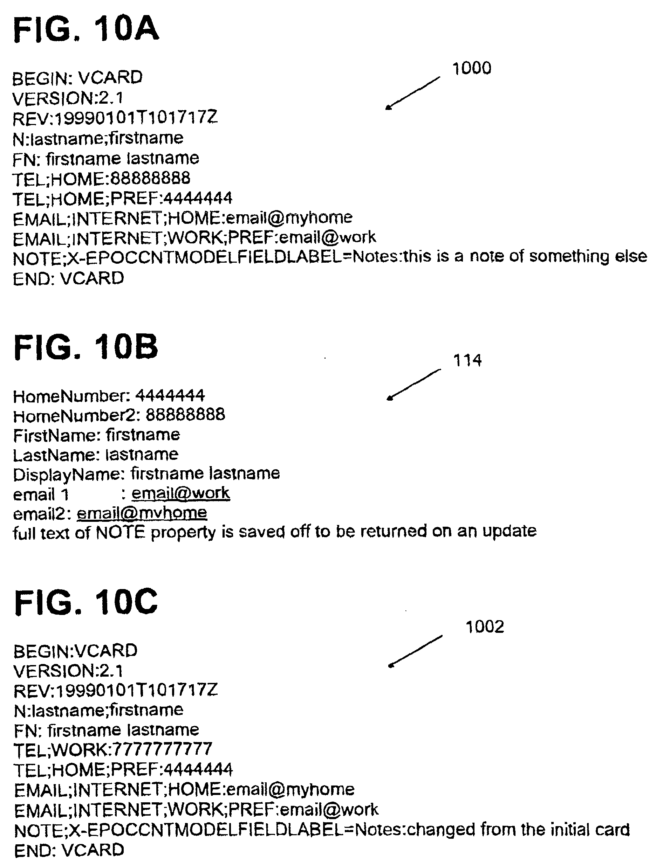

The previously described methods are utilized by the synchronization server system 102 in synchronizing PIM data between a client device 104 and the synchronization server system 102 regardless, for the most part, of the synchronization direction. To aid in illustrating the results of the methods of the preferred embodiment in a sequence of exemplary synchronization sessions in which PIM data is received from a client device 104 (i.e., having a type associated with the PIM specification file 118 of Figs. 4A and 4B) in the form of vCards and is used to update the server's iPIM storage object 114, Fig. 10A displays a new vCard 1000 which is created at the client device 104 and which is communicated from the client device 104 to the synchronization server system 102. Upon receipt of the new vCard 1000, the synchronization server system 102 operates according to the methods described herein to identify the type of the client device 104 and select the appropriate PIM specification file 118 (see Figs. 4A and 4B), to appropriately configure the universal mapper 126 using the selected PIM specification file 118, to map the vCard properties to UC fields, and to produce a UC record object which, when stored by the sync engine 122, causes the server iPIM storage object 114 to include UC fields (i.e., HomeNumber, HomeNumber2, FirstName, LastName, DisplayName, email1, and email2) having PIM data as seen in Fig. 10B. Note that the full text of the vCard's note property is saved by the universal mapper 126 in the UC record's history/association table for return to the client device 104 during a later synchronization session in the opposite direction.

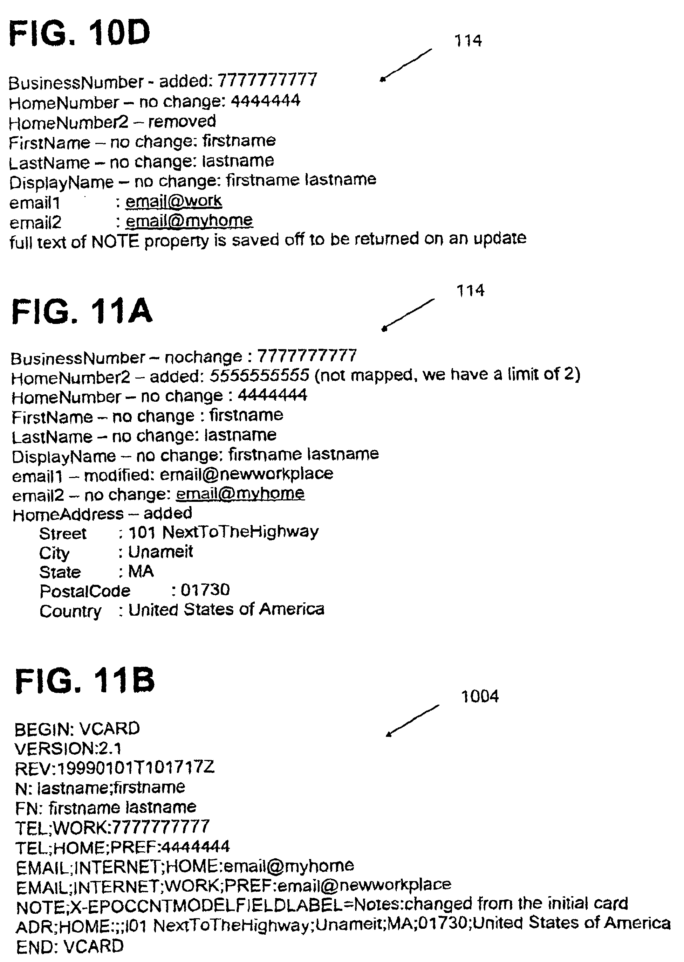

Subsequently, the client device 104 produces a second vCard 1002 (see Fig. 10C) and communicates it to the synchronization server system 102. Upon receipt of the second vCard 1002, the synchronization server system 102 operates according to the methods described herein, in a second synchronization session, to identify the type of the client device 104 and select the appropriate PIM specification file 118 (see Figs. 4A and 4B), to appropriately configure the universal mapper 126 using the selected PIM specification file 118, to map the vCard properties to UC fields, and to produce a UC record object which, when stored by the sync engine 122, causes the server iPIM storage object 114 to include UC fields (i.e., HomeNumber, HomeNumber2, FirstName, LastName, DisplayName, email1, and email2) having PIM data as seen in Fig. 10D. Note that, as a result of the receipt and processing of the second vCard 1002, the UC record of the server iPIM storage object 114 now includes an added business telephone number and a new note which has been saved in the record's history/association table. Note, also, that a second home telephone number was removed as a result of the second synchronization session.

To aid in illustrating the results of the methods of the preferred embodiment for an exemplary synchronization session in which PIM data is retrieved from the server iPIM storage object 114 and used to update the client device's dPIM storage object 130, Fig. 11A displays the server iPIM storage object 114 of Fig. 10D after changes have been made to add a second home telephone number, to modify the first email address, and to add a home address. After initiation of the synchronization session, the synchronization server system 102 operates in accordance with the methods described herein to identify the type of the client device 104 and select the appropriate PIM specification file 118 (see Figs. 4A and 4B), to appropriately configure the universal mapper 126 using the selected PIM specification file 118, to map the UC fields to vCard properties, and to produce the vCard 1004 depicted in Fig. 11B. Note that, as a result of the "MaxPerContact" configuration element 402 having a value of two, only the work telephone number and the preferred home telephone number were mapped to the vCard 1004. Also, note that the note property of the vCard 1004 includes the note text received by the synchronization server system 102 in the second vCard 1002 (i.e., which updated the UC note field that was populated initially with the note text from the note property of the new vCard 1000), thereby displaying the storing and retrieval of the previously unmapped note text from the history/association table by the universal mapper 126. In addition, note that the vCard 1004 includes an address property not present in vCards 1000, 1002, thereby illustrating the mapping of previously unmapped PIM data by the universal mapper 126.

It should be understood that the description of the preferred embodiment of the present invention is for descriptive or exemplary purposes only, and that the apparatuses and methods of the present invention may be utilized in a wired or wireless communications environment to map data between two data storage structures and/or formats. Also, the communications environment may include communication networks or communication connections other than the Internet and the use of protocols and specifications other than SyncML and vCard. Additionally, the present invention's apparatuses and methods may be employed in data management architectures other than client/server architectures. In addition, the apparatuses and methods of the present invention may be utilized to map any type of data other than personal information management data.

Whereas this invention has been described in detail with particular reference to its most preferred embodiment, it is understood that variations and modifications can be effected within the spirit and scope of the invention, as described herein before and as defined in the appended claims. The corresponding structures, materials, acts, and equivalents of all means or step plus function elements, if any, in the claims below are intended to include any structure, material, or acts for performing the functions in combination with other claimed elements as specifically claimed.

## Claims

1. A method for mapping data between a data store of a server computer and a data store of a client device, the method being executed by a computer and comprising the steps of:
reading configuration information from a data file corresponding uniquely to a particular type of client device;
dynamically constructing first programmatic elements for processing particular types of configuration information read from the data file;
executing the first programmatic elements;
dynamically building second programmatic elements, upon execution of the first programmatic elements, for processing data stored in the data store of a server computer or in the data store of a client device;
executing the second programmatic elements; and,
mapping data, upon execution of the second programmatic elements, between the data store of the server computer and the data store of the client device.

2. The method of Claim 1, wherein the method further includes a step of dynamically defining a sequence for execution of the second programmatic elements.

3. The method of Claim 1, wherein the method further includes a step of, upon execution of a second programmatic element, retrieving historical mapping information stored during previous mappings, and wherein the step of mapping data includes a step of mapping data between the data store of the server computer and the data store of the client device according to the historical mapping information.

4. The method of Claim 1, wherein the configuration information includes priority rules for mapping data between the data store of the server computer and the data store of the client device, and wherein the step of mapping data includes a step of mapping data between the data store of the server computer and the data store of the client device according to the priority rules.

5. The method of Claim 4, wherein a priority rule defines a mapping between one or more data elements of the data store of the client device and a single data element of the data store of the server computer.

6. The method of Claim 4, wherein a priority rule defines a mapping between one or more data elements of the data store of the client device and one or more data elements of the data store of the server computer.

7. The method of Claim 1, wherein the method further includes a step of, upon execution of a second programmatic element, storing historical mapping information for use in subsequent mappings.

8. The method of Claim 1, wherein the method further includes the steps of, upon execution of a second programmatic element, identifying data from the data store of the client device which is unmappable to the data store of the server computer, and storing the unmappable data for subsequent return to the client device.

9. The method of Claim 8, wherein the method further includes a step of, upon execution of a second programmatic element, retrieving the unmappable data during a subsequent mapping for communication to the client device.

10. The method of Claim 1, wherein the method further includes a step of, prior to the step of reading, receiving information identifying the data file from a plurality of data files which each uniquely correspond to a different type of client device and include respective configuration information associated with said different type of client device.

11. The method of Claim 1, wherein the client device includes a device capable of wirelessly communicating data with the server computer.

12. The method of Claim 1, wherein the step of dynamically constructing includes a step of parsing the configuration information read from the data file.

13. The method of Claim 1, wherein the configuration information identifies characters that are non-storable in the data store of the client device, and wherein the step of mapping data includes a step of, based at least upon said configuration information, detecting characters that are non-storable in the data store of the client device.

14. The method of Claim 13, wherein the configuration information identifies respective substitute characters for characters that are non-storable in the data store of the client device, and wherein the step of mapping data includes a step of, after the step of detecting, replacing non-storable characters with respective substitute characters.

15. The method of Claim 1, wherein the configuration information identifies the size of a data element allowed by the data store of the client device.

16. The method of Claim 1, wherein the method further includes a step of destructing the first programmatic elements and the second programmatic elements upon the completion of mapping.

17. The method of Claim 1, wherein the method further includes a step of, prior to the step of mapping data, receiving data from the data store of the client device in the form of a vCard if data from the data store of the client device is being mapped to the data store of the server computer.

18. The method of Claim 1, wherein the method further includes a step of, after the step of mapping data, outputting data from the data store of the server computer in the form of a vCard if data from the data store of the server computer is being mapped to the data store of the client device.

19. The method of Claim 1, wherein the method forms a part of a synchronization process for synchronizing data between the data store of the server computer and the data store of the client device.

20. A computer program having a plurality of instructions executable by a computer for implementing a method for mapping data between a data store of a server computer and a data store of a client device, said computer program for directing the computer to perform the steps of:
reading configuration information from a data file corresponding uniquely to a particular type of client device;
dynamically constructing first programmatic elements for processing particular types of configuration information read from the data file;
executing the first programmatic elements;
dynamically building second programmatic elements, upon execution of the first programmatic elements, for processing data stored in the data store of a server computer or in the data store of a client device;
executing the second programmatic elements; and,
mapping data, upon execution of the second programmatic elements, between the data store of the server computer and the data store of the client device.

21. The computer program of Claim 20, wherein said computer program further directs the computer to perform a step of dynamically defining a sequence for execution of the second programmatic elements.

22. The computer program of Claim 20, wherein said computer program further directs the computer to perform a step of, upon execution of a second programmatic element, retrieving historical mapping information stored during previous mappings, and wherein the step of mapping data includes a step of mapping data between the data store of the server computer and the data store of the client device according to the historical mapping information.

23. The computer program of Claim 20, wherein the configuration information includes a plurality of priority rules for mapping data between the data store of the server computer and the data store of the client device, and wherein the step of mapping data includes a step of mapping data between the data store of the server computer and the data store of the client device according to the plurality of priority rules.

24. The computer program of Claim 23, wherein a priority rule of the plurality of priority rules defines a mapping between one or more data elements of the data store of the client device and a single data element of the data store of the server computer.

25. The computer program of Claim 23, wherein a priority rule of the plurality of priority rules defines a mapping between one or more data elements of the data store of the client device and one or more data elements of the data store of the server computer.

26. The computer program of Claim 20, wherein said computer program further directs the computer to perform a step of, upon execution of a second programmatic element, storing historical mapping information for use in subsequent mappings.

27. The computer program of Claim 20, wherein said computer program further directs the computer to perform the steps of, upon execution of a second programmatic element, identifying data from the data store of the client device which is unmappable to the data store of the server computer, and storing the unmappable data for subsequent return to the client device.

28. The computer program of Claim 27, wherein said computer program further directs the computer to perform a step of, upon execution of a second programmatic element, retrieving the unmappable data during a subsequent mapping for communication to the client device.

29. The computer program of Claim 20, wherein said computer program further directs the computer to perform a step of, prior to the step of reading, receiving information identifying the data file from a plurality of data files which each uniquely correspond to a different type of client device and include respective configuration information associated with said different type of client device.

30. The computer program of Claim 20, wherein the client device includes a device capable of wirelessly communicating data with the server computer.

31. The computer program of Claim 20, wherein the step of dynamically constructing includes a step of parsing the configuration information read from the data file.

32. The computer program of Claim 20, wherein the configuration information includes characters that are non-storable in the data store of the client device, and wherein the step of mapping data includes a step of, based at least upon said configuration information, detecting characters that are non-storable in the data store of the client device.

33. The computer program of Claim 32, wherein the configuration information includes respective substitute characters for characters that are non-storable in the data store of the client device, and wherein the step of mapping data includes a step of, after the step of detecting, replacing non-storable characters with respective substitute characters.

34. The computer program of Claim 20, wherein the configuration information includes information identifying the size of a data element allowed by the data store of the client device.

35. The computer program of Claim 20, wherein said computer program further directs the computer to perform a step of destructing the first programmatic elements and the second programmatic elements upon the completion of mapping.

36. The computer program of Claim 20, wherein said computer program further directs the computer to perform a step of, prior to the step of mapping data, receiving data from the data store of the client device in the form of a vCard if data from the data store of the client device is being mapped to the data store of the server computer.

37. The computer program of Claim 20, wherein said computer program further directs the computer to perform a step of, after the step of mapping data, outputting data from the data store of the server computer in the form of a vCard if data from the data store of the server computer is being mapped to the data store of the client device.

38. The computer program of Claim 20, wherein said computer program forms a part of a synchronization computer program for synchronizing data between the data store of the server computer and the data store of the client device.

39. A system for mapping data between a data store of a server computer and a data store of a client device belonging to a particular type of client devices, said system comprising:
a plurality of configuration data files having configuration information, wherein each configuration data file corresponds to a respective type of client device; and,
a computer program operable to map data between a data store of a server computer and a data store of a client device belonging to a particular type of client devices, said computer program residing on a media and being executable by a processing unit, said computer program being dynamically configurable upon execution using configuration information from a configuration data file of said plurality of configuration data files associated with said particular type of client devices.

40. The system of Claim 39, wherein said computer program is operable to dynamically construct a plurality of first executable programmatic elements for processing particular types of configuration information based at least upon configuration information from said configuration data file associated with said particular type of client devices.

41. The system of Claim 40, wherein said computer program is operable, in response to execution of a first executable programmatic element of said plurality of first executable programmatic elements to dynamically construct a plurality of second executable programmatic elements for processing data stored in said data store of said server computer or in said data store of said client device.

42. The system of Claim 41, wherein said computer program is operable to determine a sequence of execution of said plurality of second executable programmatic elements and to cause execution of said plurality of second executable programmatic elements in said sequence.

43. The system of Claim 41, wherein a second executable programmatic element of said plurality of second executable programmatic elements is operable to retrieve historical mapping information from a prior mapping session and to maintain mapping identified by said mapping information while mapping data between said data store of said server computer and said data store of said client device.

44. The system of Claim 41, wherein a second executable programmatic element of said plurality of second executable programmatic elements is operable to retrieve a priority rule governing the mapping of data between said data store of said server computer and said data store of said client device, and is further operable to map data between said data store of said server computer and said data store of said client device according to said priority rule.

45. The system of Claim 41, wherein a second executable programmatic element of said plurality of second executable programmatic elements is operable to store a mapping association made between said data store of said server computer and said data store of said client device as historical mapping information for use in a subsequent mapping session.

46. The system of Claim 41, wherein a second executable programmatic element of said plurality of second executable programmatic elements is operable to identify data from said data store of said client device which is unmappable to said data store of said server computer, and to store said unmappable data for subsequent return to said client device.

47. The system of Claim 46, wherein a second executable programmatic element of said plurality of second executable programmatic elements is operable to retrieve said unmappable data and to return said unmappable data to said client device.

48. The system of Claim 39, wherein said configuration data file associated with said particular type of client devices includes information identifying a character which is non-storable in said client device.

49. The system of Claim 39, wherein said configuration data file associated with said particular type of client devices includes information identifying a substitute character for a character which is non-storable in said client device.

50. The system of Claim 39, wherein said configuration data file associated with said particular type of client devices includes information identifying a size limit for data of said data store of said client device.
